# EUROPÄISCHE PATENTSCHRIFT

(11) **EP 2 598 856 B1**
(45) Veröffentlichungstag und Bekanntmachung des Hinweises auf die Patenterteilung: **14.01.2015**
(21) Anmeldenummer: 11725086.0
(22) Anmeldetag: 14.06.2011
(51) Int. Cl.: G01M 1/32, G01M 1/36

(54) **ROTATIONSMASCHINE AUFWEISEND EINE WUCHTSCHEIBENANORDNUNG**
ROTARY MACHINE HAVING A BALANCING DISK ARRANGEMENT
MACHINE ROTATIVE COMPORTANT UN AGENCEMENT DE DISQUES D'ÉQUILIBRAGE

(30) Priorität: 29.07.2010 DE 102010038658
(43) Veröffentlichungstag der Anmeldung: 05.06.2013
(73) Patentinhaber: Robert Bosch GmbH, 70442 Stuttgart (DE)
(72) Erfinder: ROHWER, Thorsten, 71732 Tamm (DE); WESSNER, Jochen, 73728 Esslingen (DE)
(86) Internationale Anmeldenummer: PCT/EP2011/059799
(87) Internationale Veröffentlichungsnummer: WO 2012/013410

(56) Entgegenhaltungen:
- WO-A1-2008/003507
- DE-A1- 2 931 193
- US-A- 5 263 995

## Beschreibung

### GEBIET DER ERFINDUNG

Die Erfindung betrifft eine Rotationsmaschine, wie beispielsweise einen Motor oder Generator, mit einer Wuchtscheibenanordnung.

### STAND DER TECHNIK

Rotierende Körper wie zum Beispiel Rotoren von Rotationsmaschinen müssen, insbesondere, wenn sie mit großen Drehzahlen betrieben werden sollen, vor der Inbetriebnahme gewuchtet werden. Gut gewuchtete Rotoren können dabei wichtig für eine Lebensdauer von Lagern und Wellen sowie für eine Schallabstrahlung und eine Schwingungsübertragung an die Umgebung sein.

Ein starrer Rotor kann in der Regel dadurch gewuchtet werden, indem in einer oder mehreren Ebenen, welche senkrecht zu einer Rotationsachse des Rotors stehen, Massen hinzugefügt oder vermindert werden. In diesem Zusammenhang kann zwischen statischen Unwuchten und dynamischen Unwuchten unterschieden werden. Bei statischen Unwuchten liegt der Schwerpunkt des Rotors nicht auf der Rotationsachse. Eine statische Unwucht kann im Idealfall mit nur einer Wuchtungsmasse eliminiert werden. Bei dynamischen Unwuchten, die auch als Momentenunwuchten bezeichnet werden, liegt der Schwerpunkt des Rotors zwar auf der Drehachse, die Hauptträgheitsachse ist aber nicht parallel zur Drehachse. Zum Auswuchten werden hierbei in der Regel mehrere Wuchtungsmassen benötigt, die auf mindestens zwei Ebenen verteilt sein müssen, so dass die Hauptträgheitsachse des Rotors einschließlich der Wuchtungsmassen so gedreht ist, dass sie anschließend auf der Drehachse liegt.

Herkömmlich können rotierbare Körper durch Anbringen von zusätzlichen Gewichten ausgewuchtet werden. Beispielsweise können bei diesem als additives Wuchten bekannten Vorgang Bleigewichte an dem rotierbaren Körper angebracht werden oder Stifte in eine mit dem rotierbaren Körper mitrotierende Scheibe eingepresst werden. Alternativ können in eine mitrotierende Scheibe Bohrungen eingebracht werden, wodurch ein Schwerpunkt der mitrotierenden Scheibe verlagert wird. Dies wird als subtraktives Wuchten bezeichnet.

Additives Wuchten kann aufwendig sein, insbesondere, wenn eine große Unwucht ausgeglichen werden soll. Es kann nötig sein, viele Stifte in eine Wuchtscheibe, die mit entsprechenden Löchern ausgestattet ist, einzudrücken. In einem solchen Fall sollte die Wuchtscheibe aus einem Material bestehen, welches eine ausreichende Aufrechterhaltung der Vorspannung, mit der die Stifte in den Löchern der Wuchtscheibe gehalten ist, gewährleisten kann.

Beim subtraktiven Wuchten kann es beispielsweise während des Einbringens der Bohrungen zur Bildung von Spänen kommen, die anschließend schwer zu entfernen sein können.

Aus der US 5263995 und der DE 2931193 ist eine Rotationsmaschine mit einer Wuchtscheibenanordnung bekannt.

### OFFENBARUNG DER ERFINDUNG

Um insbesondere die oben genannten Probleme bei herkömmlichen Wuchtungsanordnungen bzw. Wuchtungsverfahren zu vermeiden, kann ein Bedarf an alternativen Wuchtungsanordnungen bestehen, die insbesondere eine gute Wuchtungsqualität bei vorzugsweise geringem Kosten- und Arbeitsaufwand ermöglichen.

Einem solchen Bedarf kann mit dem Gegenstand der unabhängigen Ansprüche entsprochen werden. Vorteilhafte Ausführungsformen sind in den abhängigen Ansprüchen definiert.

Gemäß einem Aspekt der vorliegenden Erfindung wird eine Rotationsmaschine mit einem Rotor, einer Welle und einer Wuchtscheibenanordnung beschrieben.

Der obige Aspekt der Erfindung bzw. deren Ausführungsformen können als auf folgenden Ideen beruhend angesehen werden:

Herkömmlich kann zum Wuchten eines rotierbaren Körpers eine einzelne Wuchtringscheibe an einer der Stirnflächen des rotierbaren Körpers angebracht werden. Gegebenenfalls kann auch jeweils eine einzelne Wuchtringscheibe an jeweils den entgegengesetzten Stirnflächen des rotierbaren Körpers angeordnet sein. Für den eigentlichen Wuchtvorgang werden dann entweder zusätzliche Gewichte in die Wuchtringscheibe in darin ausgebildete Löcher eingebracht oder gezielt lokal Masse aus einer Wuchtringscheibe, beispielsweise durch Einbringen von Bohrungen, entfernt.

Im Gegensatz hierzu soll nun eine Wuchtscheibenanordnung eine Mehrzahl von Wuchtringscheiben aufweisen. Unter einer Wuchtringscheibe kann hierbei eine Scheibe oder Platte verstanden werden, die zentral eine Ausnehmung aufweist und dadurch geeignet ist, beispielsweise über eine Welle des rotierbaren Körpers oder über den rotierbaren Körper selbst übergeschoben zu werden, so dass die Welle durch die zentrale Ausnehmung hindurch verläuft. Die Wuchtringscheibe kann dabei einen kreisförmigen Umriss haben und somit eine Kreisringscheibe darstellen. Auch die zentrale Ausnehmung kann kreisförmig sein, kann aber auch an eine andersartige Geometrie des rotierbaren Körpers bzw. dessen Welle angepasst sein.

Die Mehrzahl von Wuchtringscheiben soll beispielsweise in ihrer Geometrie derart ausgestaltet sein, dass die Wuchtringscheiben entlang der Zentralachse gestapelt werden können. Das heißt, die Wuchtringscheiben können mit ihren Hauptoberflächen in Anlage zueinander und vorzugsweise koaxial angeordnet werden. Ein Stapel derart gestapelter Wuchtringscheiben kann eine Wuchtringscheibeneinheit bilden, die sich beim schnellen Rotieren wie eine einzelne Wuchtscheibe verhält.

Außerdem sollen die Wuchtringscheiben derart ausgestaltet sein, dass sie an dem zu wuchtenden rotierbaren Körper befestigt werden bzw. mit diesem zusammenwirken können derart, dass sie mit dem rotierbaren Körper zusammen synchron um die Zentralachse rotieren können.

Jede der Wuchtringscheiben weist eine außerzentrische Ausnehmung auf. Mit anderen Worten kann eine Wuchtringscheibe zusätzlich zu der zentralen Ausnehmung, durch die beispielsweise die Welle des rotierbaren Körpers durchführbar ist, eine oder mehrere zusätzliche Ausnehmungen aufweisen, die außerzentrisch und vorzugsweise in der Nähe des Außenumfangs der Wuchtringscheibe angeordnet ist. Mit Hilfe dieser Ausnehmung(en) und der damit verbundenen Materialaussparung kann eine gewünschte Asymmetrie der Wuchtringscheibe und damit eine definierte Unwucht der jeweiligen Wuchtringscheibe erzielt werden.

Indem zwei oder mehr Wuchtringscheiben zusammengestapelt kombiniert werden, kann die durch die gesamte Wuchtscheibenanordnung erzeugte Unwucht beeinflusst werden. Beispielsweise können die beiden Wuchtringscheiben gleiche Ausnehmungen aufweisen und bezüglich der Ausnehmungen fluchtend miteinander ausgerichtet sein, so dass die beiden Wuchtringscheiben wie eine einzige dickere Scheibe mit größerer Ausnehmung und somit größerer Unwucht wirken. Alternativ können die Wuchtringscheiben auch radial verdreht zueinander gestapelt werden, so dass nicht nur die Summe der fehlenden Massen der Ausnehmungen der Wuchtringscheiben, sondern auch die Positionierung der jeweiligen Ausnehmungen relativ zueinander, das heißt, der Grad der Verdrehung der Wuchtringscheiben zueinander, einen Einfluss auf die resultierende gesamte Unwucht der Wuchtscheibenanordnung hat. Bereits mit einem Stapel aus nur zwei Wuchtringscheiben kann auf diese Weise eine Wuchtgüte von G 2,5 oder sogar G 1 erreicht werden. Die Wuchtgüte kann dabei gemäß der Norm ISO 1940 definiert sein.

Die Wuchtringscheiben können jeweils eine Dicke von weniger als 5 mm, vorzugsweise eine Dicke von weniger als 3 mm und stärker bevorzugt eine Dicke im Bereich von 1 mm bis 2 mm, aufweisen. Damit können die Wuchtringscheiben wesentlich dünner sein als herkömmliche Wuchtringscheiben. Eine Mehrzahl von gestapelten Wuchtringscheiben kann dabei eine ähnliche Dicke aufweisen, wie sie bei herkömmlichen Wuchtringscheiben verwendet wird, wobei jedoch eine durch eine solche Wuchtscheibenanordnung zu erreichende Unwucht sehr viel genauer eingestellt werden kann als bei herkömmlichen Wuchtscheiben, indem nicht nur die Größe der Ausnehmungen, sondern auch die Anordnung der verschiedenen Ausnehmungen der verschiedenen Wuchtringscheiben entsprechend gewählt wird.

Die Wuchtringscheiben der Wuchtscheibenanordnung können alle identisch sein. Die Identität kann sich dabei sowohl auf eine äußere Kontur, eine Dicke, eine Geometrie der zentralen Ausnehmung als auch insbesondere auf die Form der außerzentrischen Ausnehmung(en) beziehen. Aufgrund der identischen Ausgestaltung aller Wuchtringscheiben können Herstellungskosten für die Wuchtscheibenanordnung reduziert werden. Trotzdem kann die durch die Mehrzahl von Wuchtringscheiben erzeugte Unwucht durch eine gezielte Auswahl der Anordnung bzw. Verdrehung der Wuchtringscheiben zueinander beeinflusst werden.

Die Wuchtringscheiben können mit Kunststoff ausgebildet sein bzw. aus Kunststoff bestehen. Die Verwendung von Kunststoff kann hierbei einen Herstellungs- und Kostenaufwand reduzieren. Während herkömmliche Wuchtringscheiben meist aus Metall gefertigt sind, um in ihnen zuverlässig Zusatzgewichte einpressen zu können und um sie zuverlässig beispielsweise auf eine Welle eines Rotors aufpressen zu können, können die hier vorgeschlagenen Wuchtringscheiben aus Kunststoff ausgebildet werden, da sie geringere Stabilitätsanforderungen erfüllen müssen, weil in ihnen keine Zusatzgewichte aufgenommen werden, sondern die zu erreichende Unwucht durch vorab auszubildende Ausnehmungen erzeugt werden können. Ferner können die Kunststoff-Wuchtringscheiben, wie weiter unten detailliert beschrieben, mit Hilfe einer Hülse an einer Welle des rotierbaren Körpers gehalten werden. Kunststoff-Wuchtringscheiben können beispielsweise in einfachen Formgießverfahren kostengünstig hergestellt werden, wobei die außerzentrischen Ausnehmungen direkt beim Herstellungsprozess ausgebildet werden können.

Wuchtringscheiben können alternativ auch mit anderen Materialien ausgebildet sein. Beispielsweise können Metallscheiben zum Einsatz kommen, aus denen die Ausnehmungen ausgestanzt werden können.

Die Wuchtringscheiben können jeweils mit mehreren Ausbuchtungen entlang eines mit der Wuchtringscheibe konzentrischen Kreises ausgebildet sein. Die Ausbuchtungen können derart ausgestaltet sein, dass an einer Seite der Wuchtringscheibe eine Vertiefung entsteht und an der gegenüberliegenden Seite eine Auswölbung entsteht. Die Ausbuchtungen können entlang des konzentrischen Kreises äquidistant angeordnet sein.

Wenn die Wuchtscheibenanordnung in einer Rotationsmaschine mit einem Rotor und einer Welle eingesetzt werden, können die Ausbuchtungen der Wuchtringscheiben mit Ausnehmungen in dem Rotor zusammenwirken, um ein Verdrehen der Wuchtringscheiben in Bezug auf den Rotor zu verhindern. Mit anderen Worten können in dem Rotor entsprechende Vertiefungen vorgesehen sein, in die die Ausbuchtungen der Wuchtringscheiben kraftschlüssig oder formschlüssig eingreifen können. Die Anzahl n der in dem Rotor vorgesehenen Vertiefungen kann dabei mit der Anzahl von in der Wuchtringscheibe vorgesehenen Ausbuchtungen übereinstimmen. Somit kann die Wuchtringscheibe in n unterschiedlichen Winkelorientierungen an dem Rotor angeordnet werden. Die möglichen Orientierungen, mit der die Wuchtscheibenanordnung an dem Rotor festgelegt werden kann, kann somit durch die Anzahl und Anordnung der Ausbuchtungen vorbestimmt sein. Je mehr Ausbuchtungen vorgesehen sind, umso feiner lässt sich eine Winkelorientierung der Wuchtscheibenanordnung wählen und umso besser lässt sich eine Wuchtgüte einstellen.

Eine mit der beschriebenen Wuchtscheibenanordnung versehene Rotationsmaschine kann ferner eine Hülse aufweisen, wobei die Hülse auf der Welle aufgepresst ist und die Wuchtringscheiben axial gegen den Rotor presst. Eine solche Hülse kann somit für eine axiale Fixierung der Wuchtringscheiben an dem Rotor sorgen.

Ein Innenumfang der Hülse kann dabei mit einem Außenumfang der Welle zusammenpassen, so dass die Hülse durch Presspassung an der Welle fixiert werden kann. Ferner kann ein Außenumfang der Hülse kleiner sein als ein Innenumfang der Wuchtringscheiben. Dadurch kann erreicht werden, dass die Hülse in einer Richtung entlang der Welle unter die Wuchtringscheiben ragen kann und somit kein zusätzlicher axialer Raum entlang der Welle für die Hülse benötigt wird. Ferner kann der Innenumfang einer Hülse individuell an den Außenumfang der Welle angepasst werden, so dass für eine Fixierung von Wuchtringscheiben an einem Rotor mit verschiedenen Wellendurchmessern jeweils nur unterschiedliche Hülsen bereitgestellt werden brauchen und die Wuchtringscheiben stets dieselbe Geometrie aufweisen können, wodurch eine Kostenreduktion für die Wuchtschichtscheibe durch den Stückzahleffekt erreicht werden kann.

Außerdem kann die Hülse derart ausgebildet werden, dass sie als Biegefeder funktioniert, wobei ein federnder Teil der Hülse die Wuchtringscheiben elastisch gegen den Rotor vorspannen kann. Belastungsspitzen können auf diese Weise abgefangen werden.

Um eine Rotationsmaschine auszuwuchten, kann zunächst z.B. messtechnisch oder basierend auf Erfahrungswerten eine Unwucht der Rotationsmaschine bestimmt werden. Anhand der bestimmten Unwucht kann analysiert werden, wie eine passende Gegen-Unwucht dimensioniert und angeordnet werden muss, um die Unwucht zumindest teilweise zu kompensieren. Die auf diese Weise bestimmte Gegen-Unwucht kann mit Hilfe der beschriebenen Wuchtscheibenanordnung durch geeignetes Anordnen und Ausrichten der Wuchtringscheiben an der Rotationsmaschine implementiert werden. Dabei können einerseits geeignete Wuchtringscheiben verwendet werden, deren Ausnehmungen eine ausreichend große lokale Gewichtsverringerung darstellen, dass die gewünschte Gegen-Unwucht erreicht werden kann. Andererseits können mehrere Wuchtringscheiben derart gegeneinander verdreht angeordnet werden, dass sich in Summe der Wuchtringscheiben die gewünschte Gegen-Unwucht einstellt.

Bei guter Kenntnis der Unwucht des Rotors einer Rotationsmaschine, beispielsweise aufgrund von Erfahrungswerten, durch Kenntnis der Fertigungstoleranzen oder durch Messung , können passende Gegen-Unwuchten vorab an einer Wuchteinrichtung gestapelt vorbereitet sein, um die Fertigungszeit bzw. Wuchtungsdauer zu reduzieren. Mit anderen Worten können für den Fall, dass bekannt ist, welche Unwuchten z.B. für einen speziellen Rotortyp ausgewuchtet werden müssen, bereits vorab entsprechende Pakete aus Wuchtringenscheiben zusammengestapelt werden und als fertig vorbereitete Wuchtscheibenanordnungen in der Nähe einer Wuchteinrichtung bereit gehalten werden.

Es wird angemerkt, dass Gedanken zu der Erfindung hierin im Zusammenhang sowohl mit einer Rotationsmaschine mit einer Wuchtscheibenanordnung beschrieben werden. Einem Fachmann ist hierbei klar, dass die einzelnen beschriebenen Merkmale auf verschiedene Weisen miteinander kombiniert werden können, um so auch zu anderen Ausgestaltungen der Erfindung zu führen.

### KURZE BESCHREIBUNG DER ZEICHNUNGEN

Ausführungsformen der Erfindung werden nachfolgend mit Bezug auf die beigefügten Zeichnungen beschrieben.
Fig. 1 zeigt eine Querschnittansicht einer Rotationsmaschine mit daran angeordneten Wuchtringscheiben.
Fig. 2 zeigt einen Teilquerschnitt einer Rotationsmaschine mit einer daran angeordneten Wuchtscheibenanordnung gemäß einer Ausführungsform der vorliegenden Erfindung.
Fig. 3 zeigt eine vergrößerte Ansicht des Bereichs "X" aus Fig. 2.
Fig. 4 zeigt eine Draufsicht auf eine Wuchtringscheibe für eine Wuchtscheibenanordnung gemäß einer Ausführungsform der vorliegenden Erfindung.

Die Figuren sind lediglich schematisch und nicht maßstabsgetreu.

### AUSFÜHRUNGSFORMEN DER ERFINDUNG

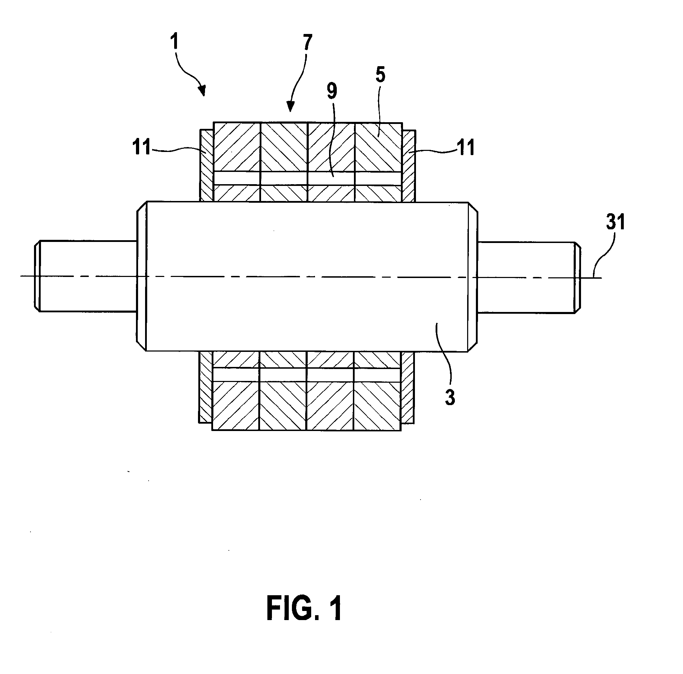

Fig. 1 zeigt eine Rotationsmaschine 1 in Form eines Elektromotors, wie er beispielsweise für Elektrofahrzeuge verwendet werden kann. Auf eine Welle 3 ist eine Mehrzahl von scheibenförmigen Rotörlamellenpaketen 5 aufgepresst. Im dargestellten Beispiel bilden vier Rotorlamellenpakete 5 einen Rotor 7 der Rotationsmaschine 1. Durch den Rotor 7 hindurch verlaufen Kanäle 9, die durch Ausnehmungen in den Rotorlamellenpaketen 5 gebildet sind.

Angrenzend an den Rotor 7 sind Wuchtringscheibenanordnungen 11 angeordnet.

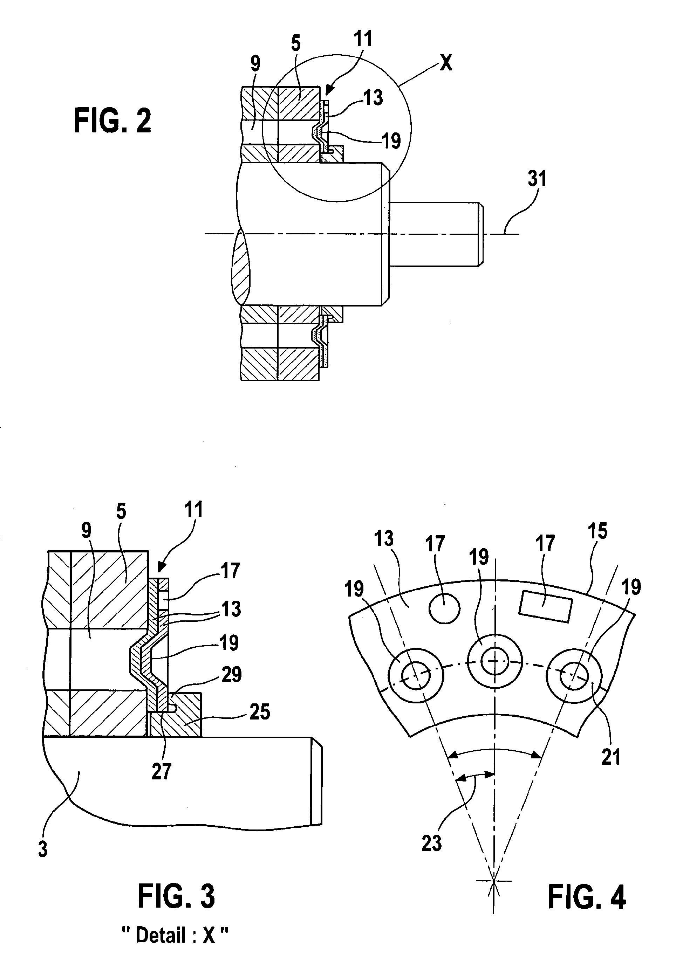

In der detaillierteren Darstellung in Fig. 2 sowie der vergrößerten Darstellung des darin gezeigten Bereichs "X" in Fig. 3 sowie in der in Fig. 4 dargestellten Draufsicht sind Einzelheiten der Wuchtscheibenanordnung 11 sowie der darin verwendeten Wuchtringscheiben 13 zu erkennen.

Eine Mehrzahl von Wuchtringscheiben 13 ist in einer Richtung entlang der Haupterstreckungsachse der Welle 3 hintereinander gestapelt. Die Haupterstreckungsachse entspricht dabei der Zentralachse 31, um die sich die Rotationsmaschine 1 im Betrieb dreht. Die Wuchtringscheiben 13 weisen alle dieselbe Geometrie auf und können daher derart gestapelt werden, dass sie sich gegenseitig entlang ihrer gesamten Seitenoberfläche kontaktieren. Sie können somit im Wesentlichen lückenlos nebeneinander gestapelt werden und einen stabilen Verbund bilden.

In die Wuchtringscheiben 13 sind in der Nähe eines äußeren Randbereichs 15 gezielt Ausnehmungen 17 eingebracht worden. Bei dem in Fig. 4 dargestellten Beispiel sind Ausnehmungen 17 unterschiedlicher Geometrie zu erkennen. Beispielsweise können die Ausnehmungen 17 eine runde Geometrie aufweisen, so dass sie beispielsweise durch Bohren ausgebildet werden können. Alternativ können die Ausnehmungen 17 auch beliebige andere Formen wie beispielsweise Rechteckformen aufweisen und beispielsweise durch Stanzen gebildet werden. Insbesondere wenn die Wuchtringscheiben 13 aus Kunststoff gefertigt werden, können die Ausnehmungen 17 bereits beim Bilden der Wuchtringscheiben 13 definiert werden und beispielsweise in einem Formspritzverfahren jede beliebige Form annehmen.

Es wird darauf hingewiesen, dass in Fig. 4 lediglich zur graphischen Veranschaulichung zwei verschiedene Ausnehmungen 17 dargestellt sind. Regelmäßig wird jedoch meist nur eine einzige Ausnehmung 17 in einer Wuchtringscheibe 13 ausgebildet. Um die durch die Ausnehmung 17 erzeugte Unwucht genau bestimmen zu können, kann es vorteilhaft sein, die Dimensionen und insbesondere das Volumen bzw. die dementsprechende Masse des im Bereich der Ausnehmung 17 fehlenden Scheibenmaterials genau zu kennen.

Um ein radiales Verdrehen der Wuchtringscheiben 13 relativ zueinander sowie relativ zu dem äußeren Rotorlamellenpaket 5 zu verhindern, weisen alle Wuchtringscheiben 13 Ausbuchtungen 19 auf, die in in den Rotorlamellenpaketen 5 vorhandene Ausnehmungen 9 eingreifen. Die Ausbuchtungen 19 können durch gezieltes lokales Verformen der Wuchtringscheiben 13 ausgebildet sein. Mehrere Ausbuchtungen 19 sind entlang eines mit der Wuchtringscheibe 13 konzentrischen Kreises 21 angeordnet. Die Ausbuchtungen 19 sind dabei entlang des Kreises 21 äquidistant zueinander angeordnet und bestimmen somit eine Winkelteilung 23.

Ein Wuchten kann durch gezieltes Anordnen der Wuchtringscheiben 13 gemäß dieser Winkelteilung 23 erfolgen. Anders ausgedrückt können die einzelnen Wuchtringscheiben 13 der Wuchtscheibenanordnung 11 zwar um die Welle 3 herum gegeneinander verdreht werden, sie können aber nur dann an dem Rotor 7 fixiert werden, wenn ihre Ausbuchtungen 19 ineinander und in die Ausnehmungen 9 in dem Rotorlamellenpaket 5 eingreifen. Eine zu erzielende Wuchtgüte kann daher von der Anzahl der verwendeten Wuchtringscheiben 13 sowie von der Möglichkeit der Verdrehung der Wuchtringscheiben zueinander, das heißt der Anzahl der vorgesehenen Ausbuchtungen 19 abhängen.

Während ein radiales Verdrehen der Wuchtringscheiben 13 auf der Welle 3 durch das Eingreifen der Ausbuchtungen 19 in die Ausnehmungen 9 der Rotorlamellenpakete 5 verhindert wird, kann eine axiale Fixierung der Wuchtringscheiben 13 durch einen Presssitz einer Hülse 25 auf der Welle 3 erreicht werden. Der Innenumfang der Hülse 25 entspricht dabei dem Außenumfang der Welle 3, so dass die Hülse 25 durch Presspassung fest an der Welle 3 gehalten sein kann. Ein Außenumfang 27 der Hülse 25 kann einem Innenumfang der Wuchtringscheiben 13 entsprechen. Die Wuchtringscheiben 13 können somit in radialer Richtung durch Anlage ihres inneren Randes der zentralen Ausnehmung an der Hülse 25 fixiert sein. Ferner können die gleichen Wuchtringscheiben 13 für verschiedene Durchmesser verschiedener Wellen 3 verwendet werden, indem lediglich unterschiedliche Hülsen 25 mit unterschiedlichen Innenumfängen verwendet werden.

Die Hülse 25 weist ferner einen elastischen Fortsatz 29 auf, der als Biegefeder ausgebildet sein kann und der die Wuchtringscheiben 13 gegen die Rotorlamellenpakete 5 pressen kann. Durch die federnde Elastizität des Fortsatzes 29 können Belastungsspitzen abgefangen werden.

Insbesondere, wenn die Rotorlamellenpakete 5 aus Metall und die Wuchtringscheiben 13 aus Kunststoff bestehen, kann durch eine Hülse 25, die vorzugsweise ebenfalls aus Metall besteht, eine zuverlässige Anpressung der Wuchtringscheiben 13 an die Rotorlamellenpakete 5 gewährleistet werden und diese trotz unterschiedlicher Wärmeausdehnungen der Metall- und Kunststoffkomponenten auch bei erheblicher Erwärmung der Rotationsmaschine aufrechterhalten bleiben. Eine Presslänge der Hülse 25 auf der Welle 3 kann dabei weiterhin groß bleiben, da die Hülse 25 innerhalb der Wuchtringscheiben 13 sitzen kann.

Typische Abmessungen der hier beschrieben Wuchtringscheiben sind ein Außendurchmesser im Bereich von 60-300mm und eine Dicke im Bereich von 0,5-5mm, vorzugsweise im Bereich von 1-2 mm. Typische Unwuchten liegen in dem Bereich von wenigen Gramm-Millimetern (gmm) bis zu 1000 Gramm-Millimetern. Die in der Wuchtringscheibe 13 vorgesehenen außenzentrischen Ausnehmungen 17 sollten nicht zu klein sein, da sonst lediglich eine sehr geringe Unwucht erzeugt werden kann. Andererseits sollten die Ausnehmungen 17 nicht zu groß sein, um übermäßigen Stabilitätsverlust bei der Wuchtringscheibe 13 zu vermeiden. Typische Abmessungen der Ausnehmungen 17 können im Bereich von wenigen Millimetern liegen. Typische durch die Ausnehmungen erzeugte Gegen-Unwuchten liegen in dem Bereich von 15-400 gmm. Beispielsweise kann eine runde Ausnehmung 17 einen Durchmesser im Bereich von 1-16 mm aufweisen.

Die Wuchtringscheiben 13 können vorteilhaft mit Kunststoff ausgebildet werden, beispielsweise im Spritzgussverfahren. Falls die Wuchtringscheiben 13 aus Metall gebildet werden, können Stanzfertigungsprozesse als günstige, Werkzeuggebundene Prozesse verwendet werden. Sicken zur Versteifung oder zur Einsparung von Gewicht können angesichts der geringen Dicke der vorgeschlagenen Wuchtringscheiben verwendet werden.

Mit der vorgeschlagenen Wuchtscheibenanordnung und dem damit möglichen Verfahren zum Auswuchten von Rotationsmaschinen kann ein kostengünstiges und dennoch präzises Wuchten mit einer Wuchtgüte von besser als G 2,5 erreicht werden.

## Patentansprüche

1. Rotationsmaschine (1) aufweisend:
einen Rotor (7); eine Welle (3);
eine Wuchtscheibenanordnung (11) zum Wuchten des rotierbaren Rotors (7), wobei die Wuchtscheibenanordnung (11)aufweist:
eine Mehrzahl von Wuchtringscheiben (13),
wobei die Wuchtringscheiben (13) dazu ausgelegt sind, an dem rotierbaren Rotor (7) festgelegt zu werden, um mit diesem synchron um eine Zentralachse (31) zu rotieren,
wobei die Wuchtringscheiben (13) entlang der Zentralachse (31) stapelbar sind,
wobei jede der Wuchtringscheiben (13) eine außerzentrische Ausnehmung (17) aufweist, so dass bei Rotation der Wuchtringscheibe (13) um die Zentralachse (31) eine Unwucht erzeugt wird,
**dadurch gekennzeichnet, dass**
die Wuchtringscheiben (13) jeweils mit mehreren Ausbuchtungen (19) entlang eines mit der Wuchtringscheibe (13) konzentrischen Kreises (21) ausgebildet sind.

2. Rotationsmaschine (1) nach Anspruch 1, wobei die Wuchtringscheiben (13) eine Dicke von weniger als 5mm aufweisen.

3. Rotationsmaschine (1) nach Anspruch 1 oder 2, wobei die alle Wuchtringscheiben (13) identisch sind.

4. Rotationsmaschine (1) nach einem der Ansprüche 1 bis 3, wobei die Wuchtringscheiben (13) mit Kunststoff ausgebildet sind.

5. Rotationsmaschine (1) nach einem der Ansprüche 1 bis 4, wobei der Rotor (7) und die Wuchtscheibenanordnung (11) entlang der Welle (3) in Anlage miteinander angeordnet sind und wobei die Ausbuchtungen (19) der Wuchtringscheiben (13) mit Ausnehmungen (9) in dem Rotor (7) zusammenwirken, um ein Verdrehen der Wuchtringscheiben (13) in Bezug auf den Rotor (7) zu verhindern.

6. Rotationsmaschine nach Anspruch 5, ferner aufweisend eine Hülse (25), wobei die Hülse (25) auf der Welle (3) aufgepresst ist und die Wuchtringscheiben (13) axial gegen den Rotor (7).presst.

7. Rotationsmaschine nach Anspruch 6, wobei ein Innenumfang der Hülse (25) mit einem Außenumfang der Welle (3) zusammenpasst und wobei ein Außenumfang der Hülse (25) kleiner ist als ein Innenumfang der Wuchtringscheiben (13).

## Claims

1. Rotary machine (1) having:
a rotor (7); a shaft (3);
a balancing disc arrangement (11) for balancing the rotatable rotor (7), the balancing disc arrangement (11) having:
a plurality of annular balancing discs (13),
the annular balancing discs (13) being designed to be secured to the rotatable rotor (7) in order to rotate synchronously with the latter about a central axis (31),
the annular balancing discs (13) being stackable along the central axis (31),
each of the annular balancing discs (13) having an eccentric recess (17), so that an unbalance is generated when the annular balancing disc (13) rotates about the central axis (31),
**characterized in that**
the annular balancing discs (13) are formed in each case with a plurality of indentations (19) along a circle (21) concentric to the annular balancing disc (13).

2. Rotary machine (1) according to Claim 1, the annular balancing discs (13) having a thickness of less than 5 mm.

3. Rotary machine (1) according to Claim 1 or 2, all the annular balancing discs (13) being identical.

4. Rotary machine (1) according to one of Claims 1 to 3, the annular balancing discs (13) being formed with plastic.

5. Rotary machine (1) according to one of Claims 1 to 4, the rotor (7) and the balancing disc arrangement (11) being arranged in bearing contact with one another along the shaft (3), and the indentations (19) of the annular balancing discs (13) cooperating with recesses (9) in the rotor (7), in order to prevent the annular balancing discs (13) from being twisted with respect to the rotor (7).

6. Rotary machine according to Claim 5, having, furthermore, a sleeve (25), the sleeve (25) being pressed on the shaft (3) and the annular balancing discs (13) pressing axially against the rotor (7).

7. Rotary machine according to Claim 6, an inner circumference of the sleeve (25) fitting together with an outer circumference of the shaft (3), and an outer circumference of the sleeve (25) being smaller than an inner circumference of the annular balancing discs (13).

## Revendications

1. Machine rotative (1), présentant :
un rotor (7) ; un arbre (3) ;
un agencement de disques d'équilibrage (11) pour équilibrer le rotor rotatif (7), l'agencement de disques d'équilibrage (11) présentant :
une pluralité de disques annulaires d'équilibrage (13),
les disques annulaires d'équilibrage (13) étant conçus pour être fixés sur le rotor rotatif (7) et
pour tourner avec celui-ci de manière synchronisée autour d'un axe central (31),
les disques annulaires d'équilibrage (13) pouvant être empilés le long de l'axe central (31),
chacun des disques annulaires d'équilibrage (13) présentant un évidement excentré (17), de sorte que lors de la rotation du disque annulaire d'équilibrage (13) autour de l'axe central (31),
un déséquilibre soit produit,
**caractérisée en ce que**
les disques annulaires d'équilibrage (13) sont à chaque fois réalisés avec plusieurs renflements (19) le long d'un cercle (21) concentrique au disque annulaire d'équilibrage (13).

2. Machine rotative (1) selon la revendication 1, dans laquelle les disques annulaires d'équilibrage (13) présentent une épaisseur inférieure à 5 mm.

3. Machine rotative (1) selon la revendication 1 ou 2, dans laquelle tous les disques annulaires d'équilibrage (13) sont identiques.

4. Machine rotative (1) selon l'une quelconque des revendications 1 à 3, dans laquelle les disques annulaires d'équilibrage (13) sont réalisés en plastique.

5. Machine rotative (1) selon l'une quelconque des revendications 1 à 4, dans laquelle le rotor (7) et l'agencement de disques d'équilibrage (11) sont disposés en appui l'un contre l'autre le long de l'arbre (3) et dans laquelle les renflements (19) des disques annulaires d'équilibrage (13) coopèrent avec des évidements (9) dans le rotor - (7) afin d'empêcher une rotation des disques annulaires d'équilibrage (13) par rapport au rotor (7).

6. Machine rotative selon la revendication 5, présentant en outre un manchon (25), le manchon (25) étant pressé sur l'arbre (3) et pressant les disques annulaires d'équilibrage (13) axialement contre le rotor (7).

7. Machine rotative selon la revendication 6, dans laquelle une périphérie intérieure du manchon (25) est adaptée à une périphérie extérieure de l'arbre (3) et dans laquelle une périphérie extérieure du manchon (25) est inférieure à une périphérie intérieure des disques annulaires d'équilibrage (13) .
